# EUROPÄISCHE PATENTSCHRIFT

(11) **EP 3 560 215 B1**
(45) Veröffentlichungstag und Bekanntmachung des Hinweises auf die Patenterteilung: **26.02.2020**
(21) Anmeldenummer: 18755812.7
(22) Anmeldetag: 16.08.2018
(51) Int. Cl.: H04R 1/02, B60R 11/02, H04R 1/08

(54) **MEHRLAGIGE LAUTSPRECHERABDECKUNG UND FAHRZEUG**
MULTI-LAYER LOUDSPEAKER COVER AND VEHICLE
CACHE DE HAUT-PARLEUR MULTICOUCHE ET VÉHICULE

(30) Priorität: 18.08.2017 DE 102017214401
(43) Veröffentlichungstag der Anmeldung: 30.10.2019
(73) Patentinhaber: Audi AG, 85045 Ingolstadt (DE)
(72) Erfinder: WEISS, Simon, 85135 Titting (DE); WENZEL, Manuel, 85290 Geisenfeld (DE)
(86) Internationale Anmeldenummer: PCT/EP2018/072186
(87) Internationale Veröffentlichungsnummer: WO 2019/034724

(56) Entgegenhaltungen:
- EP-A1- 2 683 176
- EP-A2- 0 688 142
- DE-C1- 10 220 536
- KR-Y1- 200 472 005
- US-A1- 2011 314 589

## Beschreibung

Die vorliegende Erfindung betrifft den Bereich der Automobiltechnik, insbesondere betrifft die vorliegende Erfindung eine mehrlagige Lautsprecherabdeckung. Ferner betrifft die Erfindung ein Fahrzeug.

Fahrzeuge werden mit Lausprechern ausgestattet, um beispielsweise eine Audioanlage zu betreiben. Auch können Lautsprecher im Fahrzeug Teil eines Entertainment-Systems sein. Beim Betrieb des Lautsprechers regen die Schwingungen des Lautsprechers in der Umgebung liegende Komponenten ebenfalls zum Schwingen an. Diese Schwingungen der Komponenten können allerdings von Insassen wahrgenommen werden und werden teilweise als unangenehm und störend empfunden. Um ein Mitschwingen von Komponenten zu verhindern gibt es bisher Lösungen, die Schwingungs-Entkopplungen anstreben.

DE 10 220 536 C1 beschreibt eine Lautsprecheranordnung mit einem Schaumformteil, das an einer festen Struktur schwingungs- und schalldämpfend angeordnet ist. Das Schaumteil ist einstückig ausgebildet und weist eine Öffnung zur Aufnahme eines Lautsprechers auf. Ferner weist das Schaumteil Vorsprünge zum Hintergreifen einer festen Struktur und aufbiegbare Halteelemente zur Sicherung des Lautsprechers in der Aufnahmeöffnung auf.

DE 10 2008 011 084 A1 beschreibt eine Vorrichtung zur Befestigung eines Lautsprechers an einer Halterung mittels wenigstens eines Verbindungselementepaares. Hierbei weist die Vorrichtung ein Aufnahmeelement und ein in das Aufnahmeelement form- und/oder kraftschlüssig eingreifendes Eingreifelement auf, wobei das Eingreifelement und/oder das Aufnahmeelement gummielastisch ausgebildet sind. Durch die Gummielastizität wenigstens eines der Verbindungselemente wird die Halterung weitgehend von Vibrationen des Lautsprechers mechanisch entkoppelt.

DE 10 2009 036 714 A1 beschreibt einen Karosserieabschnitt einer Rohbaukarosserie eines Fahrzeuge. Hierbei ist im Bereich einer A-Säule zumindest eine Öffnung vorgesehen, die einen umlaufenden Kragen aufweist, in welchem eine Lautsprechervorrichtung anordenbar ist. Durch eine indirekte Anordnung der Lautsprechervorrichtung in oder an der vibrations- und/oder schwingungssteifen Rohrbaukarosserie des Fahrzeugs ist eine Befestigung der Lautsprechervorrichtung an der wesentlich schwereren Karosserie des Fahrzeuges möglich. Hierdurch kann eine Übertragung von Vibrationen oder Schwingungen von der Lautsprechervorrichtung auf die Rohbaukarosserie verhindert werden. Schließlich können den Komfort einschränkende Störgeräusche vermieden werden.

EP 2 683 176 zeigt eine wasserfeste und geräuschdurchlässige mehrlagige Abdeckung für Mikrophone und Lautsprecher.

KR 200 472 005 zeigt eine Fußmatte für ein Auto, die aus bis zu vier Lagen bestehen kann.

Die vorgenannten Lösungen verwenden ein Entkopplungselement zwischen Lautsprecher und umliegender Befestigungsvorrichtung, um Lautsprecherschwingungen auf die umliegenden Komponenten zu vermeiden. Allerdings werden diese Entkopplungselemente um den Lautsprecher herum angeordnet und nehmen dementsprechend Raum in Anspruch.

Vorzugsweise werden allerdings Lautsprecher im Fahrzeug platzsparend integriert, beispielsweise innerhalb von Verkleidungen. Tendenziell ist hierbei zu beobachten, dass für die Lautsprecher weniger Bauraum im Fahrzeug zur Verfügung steht und Lautsprecher näher an vorhandenen Oberflächen plaziert werden, beispielsweise als Teil einer Verkleidung. Es ist demnach möglich, dass Lautsprecher an Oberflächen angeordnet sind und von Fahrzeuginsassen berührt werden können. Beim Berühren spüren die Insassen besonders die Schwingungen des Lautsprechers. Die Abdeckungen haben jedoch den Vorteil, dass sie den Lautsprecher mechanisch schützen und Verschmutzungen vermeiden, so dass der Lautsprecher störungsfrei betrieben werden kann. Nachteilig bei der Verwendung von Abdeckungen ist jedoch, dass die angrenzenden Komponenten wie auch die abdeckenden Komponenten beim Betrieb des Lautsprechers mitschwingen. Daher werden nicht nur seitliche Entkopplungen des Lautsprechers benötigt, sondern auch Entkopplungsvorrichtungen oberhalb eines Lautsprechers, d.h. wenn der Lautsprecher eine Abdeckung aufweist.

Es stellt sich demnach die Aufgabe, eine Konstruktion bereitzustellen, mit der Lautsprecher abgedeckt werden können und wobei gleichzeitig störende Schwingungen für Insassen im Fahrzeugraum reduziert oder ganz vermieden werden können.

Diese Aufgabe wird mit einer mehrlagigen Lautsprecherabdeckung gemäß Anspruch 1 und mit einem Fahrzeug gemäß Anspruch 10 gelöst. Weitere Ausgestaltungen ergeben sich aus den Unteransprüchen.

Erfindungsgemäß wird eine mehrlagige Lautsprecherabdeckung zur Abdeckung eines Lautsprechers vorgeschlagen. Die Lautsprecherabdeckung weist mindestens eine erste Lage, eine zweite Lage und eine dritte Lage auf, wobei die erste Lage eine luftdurchlässige Schicht ist und die zweite Lage eine Schicht mit Durchgangslöchern zum Abbau von Staudruck ist, und die dritte Lage eine formstabile Schaumschicht ist. Somit kann eine entsprechende Lautsprecheranordnung bereitgestellt werden, die einen Lautsprecher und die Lautsprecherabdeckung aufweist.

Unter Durchgangslöchern sind definierte Kanäle in der zweiten Schicht zu verstehen, die eine erste Oberfläche der zweiten Schicht mit einer zweiten Oberfläche der zweiten Schicht jeweils verbinden, wobei die erste Oberfläche der zweiten Oberfläche gegenüber liegt und als Kontaktfläche für weitere darüber liegende oder darunter liegende Schichten dient. Die Durchgangslöcher können röhrenförmig ausgestaltet sein und die Form eines hohlen Zylinders aufweisen. Querverbindungen zwischen einzelnen Durchgangslöchern können optional vorgesehen sein, sind jedoch nicht notwendig, um die eine definierte Luftströmung in der zweiten Schicht hervorzurufen, da akustisehe Wellen des Lautsprechers in den Innenraum des Fahrzeugs gelangen sollen.

Unter einer luftdurchlässigen Schicht ist eine Lage zu verstehen, die Luft hindurchlassen kann, bei der jedoch keine definierten Luftkanäle bei der Herstellung der ersten Schicht vorgesehen wurden. Ein Beispiel für eine luftdurchlässige Schicht ist ein Gewebe oder ein Stoff. Ein Beispiel für eine luftundurchlässige Schicht in diesem Zusammenhang ist eine Plastikschicht oder eine Holzschicht.

Die erfindungsgemäße Lautsprecherabdeckung kann insbesondere in einem Fahrzeug verwendet werden. Dort werden Lautsprecher auch im Fußraum des Fahrzeuges installiert, wo einerseits ein installierter Lautsprecher vor mechanischer Belastung und Schmutz geschützt werden soll und ferner die Klangqualität des Lautsprechers durch eine Abdeckung nicht verschlechtert werden soll. Somit schlägt die vorliegende Erfindung eine Lautsprecherabdeckung vor, die Schalldrücke über die vorhandenen Durchgangslöcher auf einem definierten Weg leiten kann, um Staudrücke hervorgerufen beim Betrieb des Lautsprechers abzubauen, so dass ein Insasse keine mechanischen Schwingungen wahrnimmt.

Die erfindungsgemäße Lautsprecherabdeckung kann insbesondere für tiefe Schwingungsfrequenzen des Lautsprechers verwendet werden, insbesondere in einem Bereich von etwa 20 Hz bis etwa 150 Hz. In diesem Bereich ist die mehrlagige Lautsprecherabdeckung besonders wirksam und begrenzt Vibrationen mit Amplituden im unteren Millimeterbereich oder Bruchteile hiervon.

In einer vorteilhaften Ausgestaltung der mehrlagigen Lautsprecherabdeckung kann vorgesehen werden, dass die erste Lage dem Lautsprecher abgewandt ist und die zweite Lage dem Lautsprecher zugewandt ist.

Auf diese Weise wird im bestimmungsgemäßen Gebrauch der Lautsprecherabdeckung der Lautsprecher zusätzlich vor Schmutzeinwirkungen geschützt, da die durchgängige Schicht ohne Durchgangslöcher als erste Schicht dem Lautsprecher abgewandt ist, d.h. dem Fahrgastraum des Fahrzeuges zugewandt ist.

Mit Vorteil kann in einem weiteren Ausführungsbeispiel vorgesehen werden, dass die Durchgangslöcher in einem Bereich des Lautsprechers angeordnet sind.

Demnach ist es nicht notwendig, dass die gesamte Fläche der Lautsprecherabdeckung in der zweiten Schicht mit Durchgangslöchern versehen ist, sondern nur im Bereich, in dem Schallwellen von dem Lautsprecher erzeugt werden. Die Lautsprecherabdeckung kann flächig größer als der Lautsprecher selbst sein und reicht in einem solchen Fall über die Außenabmessungen des Lautsprechers hinaus.

Ferner kann in einer weiterem Ausführungsbeispiel vorgesehen werden, dass die Durchgangslöcher senkrecht durch die zweite Lage hindurchführen.

Demnach sind die Durchgangslöcher senkrecht zu den beiden Oberflächen der zweiten Lage angeordnet und stellen auf dem kürzesten Weg eine Verbindung zwischen den beiden Oberflächen der zweiten Lage bereit. Diese Anordnung der Durchgangslöcher ist einfach in der Herstellung und kann beispielsweise durch Stanzen hervorgerufen werden. Alternativ ist es jedoch auch möglich, schräge Kanäle in der zweiten Schicht anzuordnen.

Ferner kann mit Vorteil vorgesehen werden, dass die Durchgangslöcher jeweils eine gleiche Querschnittsfläche aufweisen.

Dies bedeutet, dass die Durchgangslöcher gleich groß sind in Bezug auf ihren Durchströmungsquerschnitt. Die Geometrie der Durchgangslöcher ist beliebig wählbar, beispielsweise haben die Durchgangslöcher einen runden Querschnitt oder einen eckigen Querschnitt. Der Durchströmungsquerschnitt eines einzelnen Durchgangslochs liegt beispielsweise in der Größenordnung von 20 mm² bis 1000 mm².

In einer bevorzugten Ausgestaltung der mehrlagigen Lautsprecherabdeckung kann vorgesehen sein, dass die erste Lage eine Schutzschicht ist.

Eine Schutzschicht kann schmutzabweisend ausgebildet sein, beispielsweise durch eine glatte Oberfläche, in der sich kein Staub absetzen kann. Ferner kann die Schutzschicht dazu verwendet werden, um die Durchgangslöcher optisch zu verdecken, so dass ein Insasse in einem Fahrzeug weder die Durchgangslöcher noch den eigentlichen Lautsprecher optisch wahrnimmt. Dies ergibt ein einheitliches Erscheinungsbild und sorgt dafür, dass keine Absätze in einer Fläche vorhanden sind, an denen sich eine Person verletzen kann.

Eine solche Schaumschicht kann beispielsweise aus PU-Schaum (Polyurethan-Schaum) gebildet werden. Eine Schaumschicht kann auf einfache Weise einen darunter liegenden Lautsprecher abdecken, ohne dass dieser in seinen mechanischen Schwingeigenschaften beeinträchtigt wird. Es ist hierbei vorgesehen, dass die formstabile Schaumschicht keine Durchgangslöcher aufweist, da sie poröse genug ist, um Schall durchzulassen und es Aufgabe der zweiten Schicht ist, die im bestimmungsgemäßen Gebrauch an die dritte Schicht angrenzt, den Weg des Schalls definiert zu führen. Es kann weiterhin mit Vorteil vorgesehen werden, dass die Lautsprecherabdeckung eine vierte Schicht aufweist, die den Lautsprecher zumindest teilweise einbettet.

Eine solche Schicht kann beispielsweise aus EPP-Material oder aus EPS-Material (EPP: expanded polypropylene, EPS expanded polystyrene) gebildet sein. Die vierte Schicht, die mit dem Lautsprecher im bestimmungsgemäßen Gebrauch in Kontakt kommt kann beispielsweise vollständig oder teilweise eine Außenkontur des Lautsprechers bzw. dessen Gehäuse umschließen. Die vierte Schicht ist umrandend an dem Lautsprecher angeordnet oder auch den Lautsprecher überdeckend installiert. Eine solche Schicht kann dazu verwendet werden, um Vibrationen in der Umgebung des betriebenen Lautsprechers entgegenzuwirken. Die vierte Schicht kann als Einlageschicht verstanden werden, um eine erste mechanische Dämpfung zu bewirken, die bei dem Betrieb des Lautsprechers vorhanden ist. Somit kann zwischen einer Schaumschicht als dritter Schicht und dem Lautsprecher eine Einlageschicht als vierte angeordnet sein.

Die verschiedenen Schichten sind in Ihrer Ausprägung für jedes Fahrzeug unterschiedlich und jeweils an die Geometrie des Fahrzeugs angepasst. Insbesondere die luftdichte Schwersicht, in welche die Löcher eingebracht werden, kann beispielsweise zwischen 0,5 und 3 mm gewählt sein. Die Anzahl der Löcher ist abhängig von der Lochgröße. Schätzungsweise 50% der Membranfläche des Lautsprechers sollten erreicht werden, d.h. die Summe der Durchgangslöcher beträgt etwa die Hälfte der Membranfläche des Lautsprechers.

Insgesamt übernehmen die verschiedenen Schichten der Lautsprecherabdeckung unterschiedliche technische Funktionen. Die vierte Schicht wird verwendet, um mechanische Vibrationen am Lautsprecher selbst zu reduzieren, indem der Lautsprecher dämpfend gelagert wird. Die dritte Schicht ist porös ausgebildet als Schaumschicht und kann den Schalldruck des Lautsprechers gleichmäßig innerhalb der dritten verteilen. In der zweiten Schicht werden Staudrücke abgebaut, indem Kanäle bereitgestellt werden, so dass der Schall des Lautsprechers definiert geleitet werden kann. Die erste Schicht des Lautsprecherabdeckung ist eine Deckschicht und ist luftdurchlässig, ohne dass sie definierte Kanäle aufweist. Die erste Schicht kann die darunter liegenden Schichten und den Lautsprecher vor Verschmutzungen schützen. Ferner hat die erste Deckschicht den Vorteil, dass der Lautsprecher im bestimmungsgemäßen Gebrauch für einen Insassen nicht sichtbar ist.

Somit werden insbesondere die zweite Schicht und die vierte Schicht für die Dämpfung von Vibrationen ausgehend von einem betriebenen Lautsprecher verwendet. Die beiden Schichten unterscheiden sich jedoch in ihrer Wirkungsweise. Die vierte Schicht fixiert den Lautsprecher und dämpft Vibrationen als elastisches Formteil, indem sie mechanische Schwingungen am Lautsprecher gegenüber der Umgebung isoliert. Die zweite Schicht hingegen führt gezielt Schalldruck durch die erfindungsgemäße Lautsprecherabdeckung, so dass der Schalldruck keine Vibrationen in der Umgebung, insbesondere oberhalb des Lautsprechers in der Nähe der Lautsprecherabdeckung bewirkt. Die dritte Schicht übernimmt eine ähnliche Aufgabe wie die vierte Schicht, nämlich eine mechanische Dämpfung von Vibrationen, die von dem Lautsprecher im Betrieb ausgehen. Hierbei kann die dritte Schicht auch ein mechanischer Schutz für den Lautsprecher sein, da sie den Lautsprecher vollständig abdecken kann und durch ihre Formstabilität auch Kräfte, die oberhalb der Lautsprecherabdeckung wirken, beispielsweise durch das Gewicht von Insassen, aufnehmen kann.

Mit Vorteil kann vorgesehen werden, dass die mehrlagige Lautsprecherabdeckung eine Bodenmatte für einen Innenraum eines Fahrzeugs ist.

Bei einer solchen Ausgestaltung kann die Bodenmatte eine beliebige geometrische Form annehmen, um sich der Innengestaltung des Fußraumes im Fahrzeug anzupassen. Demnach wird die Bodenmatte zumindest in den beiden oberen Schichten, der ersten und der zweiten Schicht, formelastisch ausgestaltet, so dass sie sich an den Untergrund des Fahrzeuginnenraums anpasst. Hierbei kann die dritte Schicht und / oder vierte Schicht, falls diese vorgesehen sind, Hohlräume im Fußbereich des Fahrzeuges ausfüllen und starr installiert sein.

Es wird demnach eine Matte in der Ausgestaltung einer Bodenmatte bereitgestellt, die zwischen Komponenten oberhalb des Lautsprechers angeordnet ist. Durch eine gezielte Gestaltung der darüber liegenden Komponenten, insbesondere einer Fahrzeug-Bodenmatte, können die Schwingungen bzw. Vibrationen signifikant reduziert werden.

Für die Matte werden beispielsweise PU-Schäume, EPP-Schäume oder EPS-Schäume verwendet. Die verwendeten Schäume werden hierbei nicht gelocht, da dies sonst zu ungünstigen Effekten in Bezug auf die Dämpfung von Vibrationen führt.

Insbesondere werden hierbei in die luftundurchlässigen Bereiche der Bodenmatte gezielt Öffnungen eingebracht, durch welche Staudrücke verhindert werden. Ein Schichtaufbau mit drei oder vier Schichten ist möglich. Bei einem vierschichtigen Aufbau ist gemäß eines Ausführungsbeispiels eine oberste Schicht aus Velourmaterial, eine darunter liegende zweite Schicht eine luftundurchlässige Schwerschicht mit Duchgangslöchern in mindestens einem Teilbereich der Schwerschicht. In einer dritten und vierten Schicht kann EPP- und/oder PU-Material verwendet werden, d.h. dritte Schicht EEP-Material oder PU-Material und vierte Schicht EPP-Material oder PU-Material. In einem bevorzugten Ausführungsbeispiel mit drei Schichten weist die erste Schicht Velour-Material auf, die zweite Schicht ist eine Schwerschicht mit Durchgangslöchern in mindestens einem Teilbereich der Schwerschicht. Eine dritte Schicht, die an die Schwerschicht angrenzt weist PU-Material auf.

Die Aufgabe der Erfindung wird ferner mit einem Fahrzeug gelöst, in dem die erfindungsgemäße mehrlagige Lautsprecherabdeckung installiert ist. Beispielsweise ist die Lautsprecherabdeckung in Form einer Bodenmatte im Fußraum des Fahrzeuges eingelegt. Eine solche Bodenmatte kann beispielsweise für den Fahrer, den Beifahrer und im hinteren Bereich des Fahrzeuges für die Mitfahrer oder auch im Kofferraum vorhanden sein.

Die Erfindung bezieht auf eine Innenraumgestaltung für Fahrzeuge, um bei einem Betrieb eines Lautsprechers Vibrationen am Fahrzeug, insbesondere in dem Bereich, in dem Insassen anwesend sein können, zu reduzieren.

Insgesamt zielt die erfindungsgemäße Lösung darauf, akustische Schallwellen, die sich als Staudrücke formieren können und von betriebenen Lautsprechern ausgehen, zu vermeiden oder zumindest wesentlich zu reduzieren. Hierzu weist die erfindungsgemäße Lautsprecherabdeckung mindestens eine luftundurchlässige Schicht auf, die mit Durchgangslöchern bzw. Kanälen versehen ist, um Luftströmungen gezielt durch diese ansonsten luftundurchlässige Schicht zu leiten. Auf diese Weise kann eine großflächige Vibration durch die Bereitstellung einer definierten Luftströmung vermieden werden. Die Größe der Durchgangslöcher ist hierbei derart bemessen, dass Staudrücke ausgehend von Schallwellen des Lautsprechers vermieden werden.

Das Prinzip der vorliegenden Erfindung wird nun anhand eines von beispielhaften Ausführungsformen in den beigefügten Zeichnungen näher erläutert. Hierbei zeigen:
- Fig. 1: eine erstes Ausführungsbeispiels einer erfindungsgemäßen mehrschichtigen Lautsprecherabdeckung in Schnittansicht;
- Fig. 2: ein zweites Ausführungsbeispiel einer Lautsprecherabdeckung in einem Fahrzeug in perspektivischer Ansicht; und
- Fig. 3: das zweite Ausführungsbeispiel der Fig. 2, dargestellt ohne die erste Schicht.

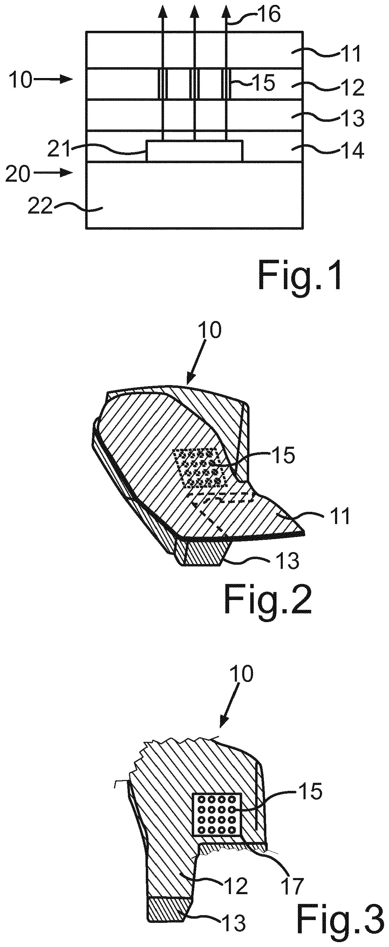

Fig. 1 zeigt schematisch eine erstes Ausführungsbeispiel einer erfindungsgemäßen mehrschichtigen Lautsprecherabdeckung 10 in Schnittansicht zur Abdeckung eines Lautsprechers 20. Der Lautsprecher 20 weist einen Lautsprecherkörper 21 mit einer Membran zur Erzeugung von Schallwellen auf. Ferner weist der Lautsprecherkörper 21 ein Gehäuse und eine Antriebseinheit mit einer elektrischen Schwingspule und einem Magneten auf. Der Lautsprecherkörper ist an eine Akustikkammer 22 bzw. ein Resonanzvolumen 22 angeschlossen, um über die schwingende Membran des Lautsprecherkörpers 21 Schallwellen zu erzeugen, die dann in die Umgebung, insbesondere geleitet über die erfindungsgemäße Lautsprecherabdeckung 10 abzugeben.

Die Lautsprecherabdeckung 10 weist insgesamt vier Lagen 11, 12, 13, 14 auf, wobei eine erste Lage 11 eine luftdurchlässige Schicht ist und als Deckschicht darunterliegende Durchgangslöcher 15 einer zweiten Schicht 12 abdeckt. Die erste Schicht 11 kann als Teppich mit einem Stoffmaterial oder einem Velours ausgebildet sein. Eine dritte Lage 13 grenzt an die zweite Lage 12 an und ist als luftdurchlässige Schicht ausgebildet, hier eine formstabile Schaumschicht in Form von PU-Schaum. An diese dritte Lage 13 grenzt eine darunterliegende vierte Lage 14, die eine Aussparung aufweist und den Lautsprecherkörper 21 teilweise umschließt, insbesondere an seinem seitlichen Randbereich einbettet und seinen oberen Bereich abdeckt. Die vierte Lage ist aus EPP-Material gebildet, das von sich aus luftdurchlässig ist, ohne dass es vordefinierte Kanäle hat. Die vierte Lage 14 kann in einem Ausführungsbeispiel vom Lautsprecherkörper 21 vollständig durchstoßen werden. In einem anderen Ausführungsbeispiel durchdringt der Lautsprecherkörper 21 nicht die vierte Schicht. Die letztere Ausführungsvariante kann beispielsweise bevorzugt gewählt werden, wenn die vierte Schicht PU-Material ist.

Beim Betrieb des Lautsprechers 20 in Fig. 1 werden Vibrationen mechanisch durch die dritte und vierte Lage 13, 14 gedämpft. In der zweiten Lage 12 wird der Schalldruck abgebaut, indem die akustischen Wellen in Form einer Luftströmung 16 gezielt durch hergestellte Kanäle als Durchgangslöcher 15 der zweiten Lage 12 geführt werden. Hierbei sind die Durchgangslöcher 15 im Bereich des Lautsprecherkörpers 21, insbesondere im Bereich der Membran des Lautsprechers 20 angeordnet. In der dargestellten Fig. 1 ist dies ein Bereich oberhalb des Lautsprecherkörpers 21 in der zweiten Schicht 12.

Durch die vorgeschlagene Geometrie und Schichtung, insbesondere durch die zweite Schicht 12 werden mechanische Vibrationen, hervorgerufen durch Schallwellen des Lautsprechers 20 gedämpft bzw. verhindert.

Fig. 2 und Fig. 3 zeigt ein zweites Ausführungsbeispiel einer Lautsprecherabdeckung 10, die als Bodenmatte in einem Fahrzeug angeordnet ist. Fig. 2 und Fig. 3 zeigen jeweils in perspektivischer Ansicht einen Ausschnitt aus einer Geometrie eines Fußraumes in einem Fahrzeug. In diesem Bereich ist ein Lautsprecher 20 installiert, der von der erfindungsgemäßen Lautsprecherabdeckung 10 abgedeckt wird. Die Lautsprecherabdeckung 10 ist flächig derart geformt, dass sie vollständig oder alternativ zumindest einen Teil des Fußraumes abdeckt.

Fig. 2 zeigt die Bodenmatte in perspektivischer Draufsicht, wobei als oberste Schicht die erste Schicht 11 dargestellt ist, die darunterliegende Durchgangslöcher 15 verdeckt. Fig. 3 zeigt die Bodenmatte der Fig. 2, wobei die erste Schicht 11 nicht dargestellt ist, so dass die Durchgangslöcher 15 der zweiten Schicht 12 sichtbar sind. Die Durchgangslöcher 15 sind in einem Bereich 17 angeordnet, der einen Lautsprecher abdeckt. Somit weist die Bodenmatte 10 nur in diesem Bereich 17 Durchgangslöcher in der zweiten Schicht 12 auf. Die übrige Bereich der zweiten Fläche weist keine Durchgangslöcher 15 auf.

Die Fig. 1 bis 3 zeigen schematisch einen mehrlagigen Aufbau von Schichten. Hierbei ist zu beachten, dass vierte Schicht optional ist. Ferner können auch weitere Schichten vorhanden sein, die in den Fig. 1 bis 3 nicht dargestellt sind. Ferner ist die Anordnung des Lautsprechers 20 mit darüber liegenden Schichten nur exemplarisch. Je nach Installationsort des Lautsprechers können die gezeigten Schichten vertikal und horizontal gekippt oder vertauscht angeordnet sein, so dass erste Schicht jeweils dem Lautsprecher abgewandt ist und die zweite Schicht dem Lautsprecher zugewandt ist.

Insgesamt wird in den Fig. 2 und Fig. 3 eine Fahrzeug-Bodenmatte gezeigt, bei der durch gezielte Gestaltung der über dem Lautsprecher liegenden Schichten Schwingungen bzw. Vibrationen signifikant reduziert werden können. Insbesondere werden hierbei in die luftundurchlässigen Bereiche der zweiten Schicht 12 der Bodenmatte gezielt Öffnungen 15 eingebracht, durch welche Staudrücke verhindert werden. Insgesamt wird eine Reduzierung von Fahrzeugvibrationen erreicht, die durch den Betrieb des Lautsprechers 20 hervorgerufen werden.

Es ergibt sich der Vorteil, dass Schwingungen bzw. Vibrationen für die Insassen eines Fahrzeuges kaum noch spürbar sind. Gleichzeitig wird die Akustik, insbesondere der Schalldruckpegel des Lautsprechers kaum beeinflusst. Somit ist ein platzsparendes Package von Lautsprechern bzw. eines Lautsprechersystems nahe am Insassen möglich.

## Patentansprüche

1. Mehrlagige Lautsprecherabdeckung (10) zur Abdeckung eines Lautsprechers (20) aufweisend
mindestens eine erste Lage (11), eine zweite Lage (12) und eine dritte Lage (13), wobei die erste Lage (11) eine luftdurchlässige Schicht ist, die zweite Lage (12) eine Schicht mit Durchgangslöchern (15) zum Abbau von Staudruck ist, und die dritte Lage (13) eine formstabile Schaumschicht ist.

2. Mehrlagige Lautsprecherabdeckung (10) nach Anspruch 1, wobei die Durchgangslöcher (15) senkrecht durch die zweite Lage (12) hindurchführen.

3. Mehrlagige Lautsprecherabdeckung (10) nach einem der vorhergehenden Ansprüche, wobei die Durchgangslöcher (15) jeweils eine gleiche Querschnittsfläche aufweisen.

4. Mehrlagige Lautsprecherabdeckung (10) nach einem der vorhergehenden Ansprüche, wobei die erste Lage (11) eine Schutzschicht ist.

5. Mehrlagige Lautsprecherabdeckung (10) nach einem der vorhergehenden Ansprüche, wobei die mehrlagige Lautsprecherabdeckung (10) eine Bodenmatte für einen Innenraum eines Fahrzeugs ist.

6. Lautsprecheranordnung mit einem Lautsprecher (20) und einer mehrlagigen Lautsprecherabdeckung (10) nach einem der vorhergehenden Ansprüche.

7. Lautsprecheranordnung nach Anspruch 6, wobei die erste Lage (11) dem Lautsprecher (20) abgewandt ist und die zweite Lage (12) dem Lautsprecher (20) zugewandt ist.

8. Lautsprecheranordnung nach Anspruch 6 oder 7, wobei die Durchgangslöcher (15) in einem Bereich (17) des Lautsprechers (20) angeordnet sind.

9. Lautsprecheranordnung nach einem der Ansprüche 6 bis 8, wobei die Lautsprecherabdeckung (10) eine vierte Schicht (14) aufweist, die den Lautsprecher (20) zumindest teilweise einbettet.

10. Fahrzeug aufweisend eine mehrlagige Lautsprecherabdeckung (10) nach einem der Ansprüche 1 bis 5 oder eine Lautsprecheranordnung nach einem der Ansprüche 6 bis 9.

## Claims

1. Multi-layer loudspeaker cover (10) for covering a loudspeaker (20), having
at least a first layer (11), a second layer (12) and a third layer (13), wherein the first layer (11) is an air-permeable layer, the second layer (12) is a layer with through-holes (15) for the reduction of dynamic pressure, and the third layer (13) is a dimensionally stable foam layer.

2. Multi-layer loudspeaker cover (10) according to claim 1, wherein the through-holes (15) pass perpendicularly through the second layer (12).

3. Multi-layer loudspeaker cover (10) according to any of the preceding claims, wherein the through-holes (15) have in each case the same cross-sectional surface.

4. Multi-layer loudspeaker cover (10) according to any of the preceding claims, wherein the first layer (11) is a protective layer.

5. Multi-layer loudspeaker cover (10) according to any of the preceding claims, wherein the multi-layer loudspeaker cover (10) is a floor mat for an interior of a vehicle.

6. Loudspeaker assembly having a loudspeaker (20) and a multi-layer loudspeaker cover (10) according to any of the preceding claims.

7. Loudspeaker assembly according to claim 6, wherein the first layer (11) faces away from the loudspeaker (20) and the second layer (12) faces towards the loudspeaker (20).

8. Loudspeaker assembly according to claim 6 or 7, wherein the through-holes (15) are disposed in a region (17) of the loudspeaker (20).

9. Loudspeaker assembly according to any of claims 6 to 8, wherein the loudspeaker cover (10) has a fourth layer (14) which at least partially embeds the loudspeaker (20).

10. Vehicle having a multi-layer loudspeaker cover (10) according to any of claims 1 to 5 or a loudspeaker assembly according to any of claims 6 to 9.

## Revendications

1. Cache de haut-parleur multicouche (10), destiné à cacher un haut-parleur (20) et comportant
au moins une première couche (11), une deuxième couche (12) et une troisième couche (13), laquelle première couche (11) est une couche perméable à l'air, laquelle deuxième couche (12) est une couche munie de trous traversants (15) pour réduire la pression dynamique et laquelle troisième couche (13) est une couche de mousse indéformable.

2. Cache de haut-parleur multicouche (10) selon la revendication 1, dans lequel les trous traversants (15) passent perpendiculairement à travers la deuxième couche (12).

3. Cache de haut-parleur multicouche (10) selon l'une quelconque des revendications précédentes, dans lequel les trous traversants (15) présentent tous une surface de section transversale identique.

4. Cache de haut-parleur multicouche (10) selon l'une quelconque des revendications précédentes, dans lequel la première couche (11) est une couche de protection.

5. Cache de haut-parleur multicouche (10) selon l'une quelconque des revendications précédentes, dans lequel le cache de haut-parleur multicouche (10) est un tapis de sol pour un habitacle d'un véhicule.

6. Installation de haut-parleur avec un haut-parleur (20) et avec un cache de haut-parleur multicouche (10) selon l'une quelconque des revendications précédentes.

7. Installation de haut-parleur selon la revendication 6, dans laquelle la première couche (11) est éloignée du haut-parleur (20) et la deuxième couche (12) est proche du haut-parleur (20).

8. Installation de haut-parleur selon la revendication 6 ou 7, dans laquelle les trous traversants (15) sont disposés dans une zone (17) du haut-parleur (20).

9. Installation de haut-parleur selon l'une quelconque des revendications 6 à 8, dans laquelle le cache de haut-parleur (10) comporte une quatrième couche (14) qui intègre au moins en partie le haut-parleur (20).

10. Véhicule comportant un cache de haut-parleur multicouche (10) selon l'une quelconque des revendications 1 à 5 ou une installation de haut-parleur selon l'une quelconque des revendications 6 à 9.
